Europäisches Patentamt

European Patent Office

Office européen des brevets

(19)

(11) Veröffentlichungsnummer: **0 160 716**

**A1**

# (12) EUROPÄISCHE PATENTANMELDUNG

(21) Anmeldenummer: **84105046.1**

(22) Anmeldetag: **04.05.84**

(51) Int. Cl.⁴: **C 08 L 75/08**
**C 08 G 18/14, C 08 G 18/10**
**C 08 G 18/08**

(43) Veröffentlichungstag der Anmeldung:
**13.11.85 Patentblatt 85/46**

(84) Benannte Vertragsstaaten:
**AT BE CH DE FR GB IT LI LU NL SE**

(71) Anmelder: **Henkel Kommanditgesellschaft auf Aktien
Postfach 1100 Henkelstrasse 67
D-4000 Düsseldorf-Holthausen(DE)**

(72) Erfinder: **Kluth, Hermann
Degerstrasse 48
D-4000 Düsseldorf 1(DE)**

(72) Erfinder: **Wegner, Jürgen, Dr.
Siegfriedstrasse 21
D-4000 Düsseldorf 11(DE)**

(72) Erfinder: **Bachmann, Robert
Marconistrasse 48
D-4000 Düsseldorf 13(DE)**

(54) **Isolierschaum.**

(57) Beschrieben wird eine feuchtigkeitshärtende, einkomponentige Polyurethanzubereitung, die als kennzeichnenden Bestandteil ein bei Raumtemperatur unter Normalbedingungen flüssiges, jedoch niedrig-siedendes Lösungsmittel enthält. Die Zubereitung kann durch Streichen, Rakeln oder Spritzen auf feuchte oder trockene Substrate aufgebracht werden und bildet dann unter Feuchtigkeitshärtung eine Isolierschaumschicht aus.

EP 0 160 716 A1

Henkelstraße 67

4000 Düsseldorf, den 2.5.1984

0160716

HENKEL KGaA

ZR-FE/Patente

Dr.Wi/Po

P a t e n t a n m e l d u n g

D 7060 EP

"Isolierschaum"

Die Erfindung betrifft die Verwendung einer speziellen, einkomponentigen, streichbaren Polyurethanzubereitung, die in ihren Eigenschaften zwischen PU-Lacken und PU-Schäumen liegt, zur Erzeugung von ein- oder mehrlagigen Isolierschichten, insbesondere auf festen Untergründen.

Zum Dämmen, Isolieren und Entdröhnen sind bereits eine große Anzahl anorganischer und organischer Materialien bekannt, die üblicherweise als Platten, Bahnen oder Halbschalen angeboten und verarbeitet werden. Darüber hinaus finden auf diesem Gebiet der Technik auch in steigendem Maße Polyurethanschäume Anwendung. Diese haben z.B. gegenüber vorgefertigten Platten den Vorteil, daß die Isolierschicht direkt an der zu isolierenden Fläche hergestellt wird und sich somit in einfacher Weise den räumlichen Gegebenheiten anpassen läßt. Die bisher zu Isolierzwecken verwendeten Polyurethanschäume, soweit es zweikomponentige Produkte sind, haben jedoch den Nachteil, daß aufgrund der aufwendigen Misch- und Spritzeinrichtungen der Einsatz bei kleinen Flächen unwirtschaftlich erscheint. Die einkomponentigen Produkte andererseits lassen sich bisher nur aus Aerosoldosen verarbeiten, die in ihrer Größe und damit in ihrer

• • •

- 2 -

Ergiebigkeit durch gesetzliche Auflagen beschränkt sind. Weiterhin können die zweikomponentigen Produkte nicht auf nasse Untergründe aufgetragen werden und es müssen genaue Verarbeitungstemperaturen eingehalten werden. Darüber hinaus ist es für alle Sprühschäumen empfehlenswert, die Umgebung der Arbeitsstelle sorgfältig abzudecken, was mit weiterem Arbeitsaufwand verbunden ist.

Die Erfindung will in all diesen Punkten Abhilfe schaffen. Sie schlägt zur Erzeugung von Isolierschichten eine einkomponentige Polyurethanzubereitung vor, die wie ein Lack durch Streichen, Rollen, Tauchen aber gewünschtenfalls auch Spritzen oder Sprühen auf eine Oberfläche aufgetragen werden kann und dort im Laufe weniger Minuten zu einer Isolierschaumschicht expandiert.

Gegenstand der Erfindung ist somit die Verwendung von Polyurethanzubereitungen, die bei Feuchtigkeitszutritt unter Volumenausdehnung härten, bestehend aus

60 - 95 Gew.-% Polyurethan-Prepolymeren mit endständigen Isocyanatgruppen

0,5 - 5 Gew.-% Schaumstabilisatoren

3 - 30 Gew.-% bei Raumtemperatur unter Normalbedingungen flüssigen, jedoch niedrigsiedenden Lösungsmitteln und

gewünschtenfalls bis zu 20 Gew.-% weiteren Hilfsstoffen

zur Erzeugung ein- oder mehrlagiger Isolierschaumschichten auf gewünschtenfalls feuchten Untergründen.

...

Einkomponentige Polyurethanzubereitungen sind seit Jahren bekannt und in vielfältiger Ausgestaltungsform im Handel. Derartige Zubereitungen lassen sich entsprechend ihres Schaumvermögens in drei Klassen einteilen:

- nicht oder wenig schäumende
- mittel schäumende
- stark schäumende Produkte.

Zu den nicht schäumenden einkomponentigen Polyurethanzubereitungen gehören PU-Lacke. Diese enthalten gewöhnlich Zusätze, die die Blasenbildung verhindern. Auch wenn derartige Zusätze aus Polyurethanlacken entfernt werden, kommt man nicht zu den in der Erfindung verwendeten Produkten, da sich selbst bei Besprühen mit Wasser keine oder nur minimale Schaumhöhen erreichen lassen. Auf der anderen Seite sind auch die stark schäumenden Polyurethanprodukte im Sinne der Erfindung nicht verwendbar, da diese Treibmittel enthalten und somit in Aerosoldosen oder in anderen Druckgefäßen gelagert werden müssen.

Zur Lösung der erfindungsgemäßen Aufgabe können nur schwach schäumende Polyurethanzubereitungen herangezogen werden. Kennzeichnend ist hier die Verwendung einer Kombination aus Schaumstabilisatoren wie sie auch bei einkomponentigen Polyurethanschäumen üblich sind und niedrigsiedenden, jedoch bei Raumtemperatur unter Normalbedingungen flüssigen Lösungsmitteln, insbesondere mit Siedebereich 20 - 60°C anstelle von Treibmitteln. Als Lösungsmittel sind hier mehr oder minder apolare, mit Isocyanatgruppen nicht reagierende organische Lösungsmittel geeignet. So können Ether, Alkane und/oder halogenierte Kohlenwasserstoffe eingesetzt werden. Bevorzugt sind Lösungsmittel, die mit den Polyurethan-Prepolymeren nicht in jedem Verhältnis mischbar sind, d.h. die gegenüber den den entstehenden Polymeren eine gewisse Restunverträglichkeit aufweisen. Derartige Lösungsmittel sind in erster Linie halogenierte Kohlenwasserstoffe mit 1 - 4 C-Atomen, insbesondere 1 oder 2 C-Atomen, bei denen alle oder die Mehrzahl der Wasserstoffatome durch Chlor oder Fluor ersetzt sind. Besonders geeignet sind hier Trifluortrichlorethan und dessen Isomere wie auch Monofluortrichlormethan und andere Fluorkohlenwasserstoffe mit Siedebereich zwischen 20 und 60$^{\circ}$C.

Die genannten Halogenkohlenwasserstoffe sind aufgrund ihrer Nichtbrennbarkeit bevorzugt. In Anwendungsfällen, bei denen die Brennbarkeit keine Rolle spielt, können andere leicht flüchtige organische Lösungsmittel verwendet werden. So empfiehlt sich hier die Verwendung von beispielsweise n-Pentan, isomeren Pentanen, isomeren Hexanen, Diethylether oder auch Methylisobutylether.

Die Menge der Lösungsmittel ist durch ihre Löslichkeit in den Polyurethanzubereitungen beschränkt. Im allgemeinen erhalten die erfindungsgemäß eingesetzten Polyurethanzubereitungen 3 - 30 Gew.-% Lösungsmittel. Bei geringeren Mengen ist die Ausbildung einer Schaumschicht in Frage gestellt; größere Mengen können nur dann eingesetzt werden, wenn sie mit den Prepolymeren verträglich sind, was bei Fluorkohlenwasserstoffen und Pentan meist nicht der Fall ist. Bevorzugt ist die Verwendung von bis zu 25 Gew.-% Fluorkohlenwasserstoffe, insbesondere 10 - 20 Gew.-%. Bei Pentan werden bereits mit 4 - 10 Gew.-% günstige Ergebnisse erhalten.

...

Die erfindungsgemäß verwendeten Polyurethanzubereitungen, die bei Feuchtigkeitszutritt unter Schaumbildung härten, enthalten als Hauptbestandteil 60 - 95 Gew.-% eines Polyurethan-Prepolymeren mit endständigen Isocyanatgruppen. Geeignete Polyurethan-Prepolymere werden durch Umsetzung mehrfunktioneller Alkohole mit mehrfunktionellen Isocyanaten im Überschuß erhalten. Geeignete mehrfunktionelle Alkohole weisen im Mittel 2 bis mehr als 4, vorzugsweise 2 - 3 Hydroxylgruppen auf und eine OH-Zahl zwischen 50 und 250, insbesondere zwischen 80 und 200. Geeignet sind hier insbesondere mehrfunktionelle Alkohole mit einem Molekulargewicht zwischen 500 und 5000 und unter diesen wiederum die Umsetzungsprodukte von Diolen, Triolen oder Tetraolen mit Ethylenoxid, Propylenoxid oder Glycid. So können insbesondere die Umsetzungsprodukte von Ethylenglykol, Propylenglykol, Glycerin, Trimethylolethan, Trimethylolpropan, Pentaerythrit oder von Aminoalkoholen wie beispielsweise Triethanolamin oder Tripropanolamin oder 2-Amino-2-methylpropandiol mit den vorgenannten Epoxiden eingesetzt werden. Weitere geeignete mehrfunktionelle Alkohole sind beispielsweise Ricinusöl oder die Umsetzungsprodukte epoxydierter Fettsäuretriglyceride mit monofunktionellen Alkoholen. Darüber hinaus sind Umsetzungsprodukte der vorgenannten Diole oder Triole mit Caprolacton geeignet.

Um die für die erfindungsgemäße Verwendunggeeigneten Prepolymeren zu erhalten, ist es bevorzugt, die mehrfunktionellen Alkohole mit aromatischen Isocyanaten der Funktionalität 2 - 3 umzusetzen. Besonders geeignet sind technische Qualitäten des Diphenylmethandiisocyanats, welche eine durchschnittliche Funktionalität

...

zwischen 2,0 und 2,5 aufweisen. Weiterhin geeignet sind aber auch p-Phenylendiisocyanat und Xylylendiisocyanat. Auch aliphatische und cycloaliphatische mehrfunktionelle Isocyanate wie Hexamethylendiisocyanat oder Isophorondiisocyanat können mitverwendet werden. Weniger geeignet sind aromatische mehrfunktionelle Isocyanate mit relativ hohem Dampfdruck wie z.B. Toluylendiisocyanat. Das Verhältnis von OH-Gruppen : Isocyanatgruppen liegt zwischen 1 : 3 und 1 : 11. Dabei werden mit höheren Isocyanatüberschüssen eher niedrigviskose Zubereitungen erhalten, während niedere Isocyanatüberschüsse, etwa 1 : 3 bis 1 : 4, hochviskose, meist nur noch spachtelbare Prepolymere bedingen.

Es ist dem Polyurethan-Fachmann bekannt, daß die Vernetzungsdichte und damit Härte und Sprödigkeit der Polyurethane mit der Funktionalität der Isocyanatkomponente oder auch des Polyols zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York - London, Teil I (1962) und Teil II (1964).

Die erfindungsgemäß zu verwendenden Polyurethanzubereitungen enthalten weiterhin Schaumstabilisatoren in Mengen von 0,5 - 8 Gew.-%, vorzugsweise von 1 - 4 Gew.-% und insbesondere zwischen 1 und 2 Gew.-%. Als Schaumstabilisatoren werden bevorzugt sogenannte Silikonten-

- 7 -

side verwendet. Es sind dies Blockcopolymere, die aus einem Polysiloxanblock und einem oder mehreren Polyoxyethylen- und/oder Polyoxypropylenblöcken aufgebaut sind. Derartige Produkte werden in großer Vielzahl im Handel angeboten. Wenn auch über ihre Funktion keine gesicherten Erkenntnisse vorliegen, so ist doch zu vermuten, daß diese Substanzen während des Aushärtevorgangs der Prepolymeren in den noch weichen Schäumen die Schaumblasen stabilisieren und damit an der Koaleszens und am Zusammenfallen hindern. In einer bevorzugten Ausführungsform der Erfindung werden Art und Menge der Silikontenside derart miteinander abgestimmt, daß der Klebstoff beim Aushärten letztendlich eine Volumensvergrösserung von 100 - 2500 %, vorzugsweise 300 - 1000% erfährt. Dies wird beispielsweise mit einer Menge von 0,5 bis 5 Gew.-% des Produktes Rhodorsil-Öl 1605 der Firma Rhône-Poulenc erreicht. Es handelt sich dabei um ein Siloxan-Polyethercopolymer mit einer Viskosität von ca. 620 cSt bei $25^{O}C$, einem Stockpunkt von - $38^{O}C$ und einer Oberflächenspannung bei $25^{O}C$ von 23,5 mN/m.

Weitere geeignete Silikontenside werden z.B. von I.R. Schmolka in M.J. Schick "Nonionic Surtactants", Vol. 2, erschienen 1967 bei Marcel Dekker, New York beschrieben. Verwiesen sei jedoch auch auf B. Kanner et al., Journal of Cellular Plastics (1979), Seite 315.

Die erfindungsgemäß verwendeten Polyurethanzubereitungen können weiterhin als Hilfsstoffe Füllstoffe und/oder Pigmente enthalten. Hier kommen insbesondere fein verteilte anorganische und/oder organische Pigmente in Frage. Bevorzugt sind Stoffe, die eine Raumstruktur aufbauen und somit das Standvermögen an vertikalen

...

0160716
HENKEL KGaA
ZR-FE/Patente

- 8 -

Flächen verbessern und die Streichbarkeit positiv beeinflussen. Dies sind insbesondere die folgenden Stoffe: pyrogene Kieselsäuren, Schichtsilikate wie künstliche oder. natürliche Bentonite, Ruß, Polymerpulver oder Polymerkurzschnittfasern, insbesondere Pulver oder Fasern von Polyolefinen, Polyamiden, Polyestern sowie anorganische Fasern wie Glasfasern, Steinwolle oder Asbest. Beim Einbringen dieser Hilfsstoffe in die Polyurethanzubereitungen hat der Fachmann darauf zu achten, daß sie zumindest weitgehend wasserfrei sind, um ein verfrühtes, nicht gewolltes Aufschäumen und eine Herabsetzung der Lagerstabilität zu verhindern. Weiterhin wird der Fachmann, wenn er lagerstabile Produkte herstellen will, in Vorversuchen sicher stellen, daß die eingesetzten Hilfsstoffe auch nicht anderweitig die Lagerstabilität oder die Gebrauchseigenschaften negativ beeinflussen und gewünschtenfalls übliche Stabilisatoren zusetzen.

Die erfindungsgemäß zu verwendenden Polyurethanzubereitungen können weiterhin zusätzliche - ansich bekannte - Hilfsstoffe enthalten. So können z.B. Verflüssiger verwendet werden, die die Flammfestigkeit der Polyurethanschäume vergrössern. Gängig sind Phosphor- und/ oder Halogenatome enthaltende Verbindungen, wie Trikresylphosphat, Diphenylkresylphosphat, Tris-2-chlorethylphosphat, Tris-2-chlorpropylphosphat und Tris-2,3-dibrompropylphosphat. Zusätzlich können Flammschutzmittel verwendet werden, z.B. Chlorparaffine, Halogenphosphite, Ammoniumphosphat und halogen- und phosphorhaltige Harze.

. . .

0160716
HENKEL KGaA
ZR-FE/Patente

- 9 -

Die erfindungsgemäß zu verwendenden Prepolymere können
weiterhin phosphorfreie Weichmacher enthalten. Geeignet sind hier z.B. Ester der Phthalsäure, wie z.B.
Di-2-ethylhexylphthalat, Diisononyl- und Diisodecylphthalat, Dibutylphthalat, Diisobutylphthalat, Dicylohexylphthalat, Dimethylglykolphthalat, Dicaprylphthalat
und Dioctylphthalat. Weiterhin geeignet sind Diester
aliphatischer Dicarbonsäuren, wie z.B. Di-2-ethylhexyl-
adipat, Diisodecyladipat sowie die entsprechenden
Ester der Sebacinsäure und der Azelainsäure. Weitere
geeignete Weichmacher sind Polyester aus Adipinsäure,
Sebacinsäure, Azelainsäure oder Phthalsäure mit Diolen,
wie Butandiol, Propandiol oder verschiedenen Hexandiolen im Molekulargewichtsbereich zwischen 850 und
8000. Schließlich sind auch die Ester von Fettsäureschnitten mit kurzkettigen aliphatischen Alkoholen,
wie Methanol, Ethanol, Butanol, Isobutanol und Isopropanol geeignet. Eine weitere Klasse von geeigneten
Weichmachern sind sogenannte Epoxidweichmacher, also
epoxydierte Fettsäurederivate, z.B. epoxydierte Triglyceride oder epoxydierte Fettsäuremethyl-, -ethyl-
oder -propylester. Es sei hier auf die einschlägige
Fachliteratur verwiesen.

Die erfindungsgemäß zu verwendenden Polyurethanzubereitungen können weiterhin Beschleuniger enthalten. Dies ist
insbesondere dann gefordert, wenn das Verschäumen bei
Raumtemperatur oder darunter durchgeführt werden sollen.
Hier finden die bei Polyurethanschäumen üblichen Beschleuniger Anwendung. Geeignet sind z.B. tertiäre
Basen, wie Bis-(N,N,-dimethylamino)-diethylether,
Dimethylaminocyclohexan, N,N-Dimethyl-benzylamin,

...

N-Methylmorpholin sowie die Umsetzungsprodukte von Dialkyl-(ß-hydroxyethyl)-amin mit Monoisocyanaten und Veresterungsprodukte von Dialkyl-(ß-hydroxyethyl)-amin und Dicarbonsäuren. Ein weiterer wichtiger Beschleuniger ist das 1,4-Diamino-bicyclo-(2.2.2)-octan. Ferner können nichtbasische Substanzen als Beschleuniger verwendet werden. Hier seien Metallverbindungen genannt    beispielsweise Eisenpentacarbonyl, Nickeltetracarbonyl,   Eisenacetylacetonat sowie Zinn-(II)-(2-ethylhexoat), Dibutylzinndilaurat oder Molybdänglykolat.

Die beschriebenen Lösungsmittel enthaltenden Prepolymeren können im Sinne der Erfindung als vielseitig einsetzbarer Streichschaum verwendet werden. Nach einer allgemeinen Ausführungsform wird dabei die Polyurethanzubereitung auf eine trockene Oberfläche aufgebracht und durch Einwirken von Luftfeuchtigkeit oder aufgesprühtem Wasser zum Ausschäumen gebracht. Nach einer weiteren allgemeiner Ausführungsform der Erfindung kann der Streichschaum auch auf einen feuchten Untergrund aufgebracht werden, wodurch höhere Schaumhöhen erreicht werden. Der ausgehärtete Streichschaum selbst ist ein hervorragender Untergrund für eine weitere Schaumschicht, so daß im Mehrfachauftrag auch höhere Schichtdicken erreicht werden können.

Der Streichschaum kann weiterhin mit anderen Materialien zu Verbundstoffen zusammengefügt werden. So kann man beispielsweise das Prepolymere auf textile Gebilde wie Gewebe oder Vliese, die gewünschtenfalls feucht sind, auftragen oder man kann derartige Vliese in eine gerade

...

- 11 -

aushärtende Schaumschicht einlegen. Auch die Herstellung von Lamellaten oder Sandwich-Elementen ist möglich.

Die erfindungsgemäß eingesetzten Polyurethanzubereitungen haben den Vorteil auf fast allen Untergründen ausgezeichnete Haftung zu ergeben. Einschränkungen sind hier lediglich hinsichtlich Fluorpolymere und silikonisierter Oberflächen zu machen. Bei manchen Anwendungen kann es jedoch gewünscht sein, die Oberfläche vorzubehandeln. So kann beim Auftragen auf feste Untergründe ein Voranstrich mit einem wäßrigen Dispersionskleber gewünscht sein.

Der erfindungsgemäß eingesetzte Streichschaum eignet sich zur thermischen und akustischen Isolierung und zur Entdröhnung dünner Bauteile. Weiterhin können poröse Materialien gegen Feuchtigkeit abgedichtet werden. Die spezielle Applikationsart erleichtert die zielgenaue Ausbesserung bzw. Reparatur von bereits bestehenden Isolationssystemen genauso wie den großflächigen Auftrag an horizontalen oder vertikalen Flächen. Dabei ist es von besonderer Bedeutung, daß die Produkte drucklos gelagert werden können und damit in beliebig großen Gebinden abgepackt werden können.

0160716
HENKEL KGaA
ZR-FE/Patente

- 12 -

# B e i s p i e l e

Es wurden Polyurethan-Prepolymere zur Verwendung als Isolierschäume hergestellt aus:

- 44,4 Gew.-Teilen Diphenylmethandiisocyanat
- 35,6 Gew.-Teilen Polyolmischung
- 20,0 Gew.-Teilen niedrig-siedendem Lösungsmittel.

Als Polyolmischung wurde ein Gemisch auf den folgenden Bestandteilen eingesetzt:

- 54,0 Gew.-% Polyethertriol (Reaktionsprodukt von Triethanolamin mit 17 mol Propylenoxid)
- 14,0 Gew.-% Polyetherdiol auf Basis Ethylenoxid (Molekulargewicht ca. 1000)
- 28,0 Gew.-% Diphenylkresylphosphat
- 4,0 Gew.-% Silikon-Tensid (Rhodorsil-öl 1605[R])

Als niedrig-siedende Lösungsmittel wurden verwendet:

Trichlortrifluorethan (Beispiel 1)

Trichlorfluormethan (Beispiel 2)

n-Pentan (Beispiel 3)

Toluol (Vergleichsbeispiel)

Zur Herstellung von Isolierschaumschichten wurden die Prepolymerlösungen nach Beispiel 1 - 3 und nach dem Vergleichsbeispiel auf lufttrockene bzw. befeuchtete Tischlerplatten in Schichtdicken von 0,2 bzw. 0,5 mm mit einer Rakel aufgebracht. Aushärtung erfolgte bei einer Temperatur von 23°C und 50 % relativer Luft-

...

0160716
HENKEL KGaA
ZR-FE/Patente

- 13 -

feuchtigkeit. Zur Demonstration des günstigen Effektes der erfindungsgemäß eingesetzten niedrig-siedenden Lösungsmittel wurde die Schichtdicke der ausgehärteten Isolierschäume nach 24-stündiger Lagerung in Abhängigkeit vom verwendeten Lösungsmittel bestimmt. Die Werte finden sich in der Tabelle.

. . .

Patentenmeldung D 7060 EP

- 14 -

0160716
HENKEL KGaA
ZR-FE/Patente

## T A B E L L E

| Lösungsmittel | Schaumschichtdicke in mm nach Härtung | | | |
| --- | --- | --- | --- | --- |
| | 0,2 mm Auftrag | | 0,5 mm Auftrag | |
| | befeuchtet | lufttrocken | befeuchtet | lufttrocken |
| Trichlortrifluorethan | 0,60 | 0,65 | 5,15 | 4,65 |
| Trichlorfluormethan | 1,10 | 0,90 | 5,65 | 5,00 |
| n - Pentan | 0,60 | 0,55 | 4,20 | 2,80 |
| Toluol | 0,30 | 0,35 | 2,85 | 1,35 |

0160716
HENKEL KGaA
ZR-FE/Patente

## Patentansprüche

1. Verwendung von Polyurethanzubereitungen, die bei Feuchtigkeitszutritt unter Volumenausdehnung härten, bestehend aus

60 - 95 Gew.-% Polyurethan-Prepolymeren mit endständigen Isocyanatgruppen

0,5 - 5 Gew.-% Schaumstabilisatoren

3 - 30 Gew.-% bei Raumtemperatur unter Normalbedingungen flüssigen, jedoch niedrigsiedenden Lösungsmitteln und

gewünschtenfalls bis zu 20 Gew.-% weiteren Hilfsstoffen

zur Erzeugung ein- oder mehrlagiger Isolierschaumschichten auf gewünschtenfalls feuchten Untergründen.

2. Ausgestaltung nach Anspruch 1, dadurch gekennzeichnet, daß als niedrig-siedende organische Lösungsmittel Ether, Alkane und/oder halogenierte Kohlenwasserstoffe mit Siedebereich 20 - 60°C, insbesondere fluorierte Kohlenwasserstoffe eingesetzt werden.

3. Ausgestaltung nach den Ansprüchen 1 und 2, dadurch gekennzeichnet, daß Lösungsmittel eingesetzt werden, die mit dem Polyurethanprepolymeren nicht in jedem Verhältnis mischbar sind, insbesondere Trifluortrichlorethan, Monofluortrichlormethan, Pentan und/oder Methylisobutylether.

4. Ausgestaltung nach den Ansprüchen 1 - 3, dadurch gekennzeichnet, daß als Hilfsstoffe Füllstoffe, Pig-

...

mente und/oder Thixotropierungsmittel eingesetzt werden, insbesondere pyrogene Kieselsäure, Schichtsilikate wie synthetische oder natürliche Bentonite, Ruß, Pulver und/oder Faserkurzschnitte von Polyolefinen, Polyestern und/oder Polyamiden sowie gewünschtenfalls anorganische Fasern, Kurzschnitte wie Glasfaserkurzschnitte oder Asbest.

5. Ausgestaltung nach den Ansprüchen 1 - 4, dadurch gekennzeichnet, daß als Prepolymere Umsetzungsprodukte aromatischer Diisocyanate der Funktionalität 2,0 - 3,0, vorzugsweise 2,0 - 2,5, mit mehrfunktionellen Alkoholen mit einer OH-Zahl zwischen 50 und 250 verwendet werden.

6. Ausgestaltung nach den Ansprüchen 1 - 5, dadurch gekennzeichnet, daß als Schaumstabilisatoren Polysiloxane, insbesondere ein Polysiloxan-Polyoxyalkylen-Copolymeres, verwendet werden.

7. Ausgestaltung nach den Ansprüchen 1 - 6, dadurch gekennzeichnet, daß in der Polyurethanzubereitung übliche weitere Hilfsstoffe, insbesondere Flammschutzmittel, Weichmacher und/oder Beschleuniger mitverwendet werden.

8. Ausgestaltung nach den Ansprüchen 1 - 7, dadurch gekennzeichnet, daß Polyurethanzubereitungen verwendet werden, die beim Aushärten eine Volumenvergrößerung von etwa 100 - 2500 %, vorzugsweise 300 - 1000%, aufweisen.

...

9. Ausgestaltung nach den Ansprüchen 1 - 8, dadurch gekennzeichnet, daß man die Isolierschichten ein- oder mehrlagig auf gewünschtenfalls feuchte, saugfähige Substrate, insbesondere Holz, Spanplatten, Gips, Mauerwerk oder Textilgebilde aufträgt.

10. Ausgestaltung nach den Ansprüchen 1 - 8, dadurch gekennzeichnet, daß man die Isolierschichten ein- oder mehrlagig auf nichtsaugende Substrate, insbesondere Glas, Keramik oder Metall aufbringt.

11. Ausgestaltung nach den Ansprüchen 1, 9 und 10, dadurch gekennzeichnet, daß das zu beschichtende Substrat vor Aufbringung des Isolierschaums mit einer haftfesten wäßrigen Zubereitung, insbesondere einem wäßrigen Dispersionskleber vorbehandelt wird.

Europäisches
Patentamt

**EUROPÄISCHER RECHERCHENBERICHT**

**0160716**

Nummer der Anmeldung

EP 84 10 5046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | EP-A-0 076 956  (BAYER AG.) * Ansprüche; Seite 11, Zeile 11 - Seite 12, Zeile 4; Seite 13, Zeilen 11-21 * | 1-5 | C 08 L  75/08<br>C 08 G  18/14<br>C 08 G  18/10<br>C 08 G  18/08 |
| A | PATENT ABSTRACTS OF JAPAN Band 7, Nr. 277, 9. Dezember 1983, Seite (C-199) (1422); & JP-A-58-154714 (HITACHI SEISAKUSHO) 14-09-1983 | 1-6 | |
| A | GB-A-2 053 943  (CONVENIENCE PRODUCTS INC.) * Ansprüche 1, 4, 6, 16, 21, 22, 25; Seite 4, Tabelle * | 1,5-7 | |
| A | AT-B- 270 237  (STANDARD OIL CO.) * Ansprüche; Seite 2, Zeilen 24-29; Seite 2, Zeile 55 - Seite 3, Zeile 3 * | 1-3 | RECHERCHIERTE SACHGEBIETE (Int. Cl.4)<br><br>C 08 G  18/00<br>C 08 L  75/00<br>C 09 D   3/00 |
| A | EP-A-0 103 309 (BGB-GESELLSCHAFT R. JOHN et al.) * Zusammenfassung; Seite 10, Zeilen 1-11; Seite 10, Zeile 36 - Seite 12, Zeile 10; Seite 13, Zeile 30 - Seite 14, Zeile 9; Seite 14, Zeile 23 - Seite 15, Zeile 30 * | 1,4,9, 10 | |

--- -/-

Der vorliegende Recherchenbericht wurde für alle Patentansprüche erstellt

| Recherchenort | Abschlußdatum der Recherche | Prüfer |
|---|---|---|
| BERLIN | 17-12-1984 | HASS C V F |

Europäisches
Patentamt

EUROPÄISCHER RECHERCHENBERICHT

**0160716**
Nummer der Anmeldung

EP 84 10 5046

Seite 2

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| A | EP-A-0 025 500 (METZELER KAUTSCHUK GMBH) * Seite 5, Zeilen 21-31 * ----- | 1 | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| BERLIN | 17-12-1984 | HASS C V F |